# EUROPEAN PATENT APPLICATION

(11) **EP 1 168 221 A1**
(43) Date of publication of application: **02.01.2002**
(21) Application number: 01305449.9
(22) Date of filing: 22.06.2001
(51) Int. Cl.: G06F 17/60

(54) **Systems and methods for providing interactive customer access to a frequent shopper program and for delivering frequent shopper program information to targeted customers**

(30) Priority: 27.06.2000 US 214672; 18.07.2000 US 618250
(71) Applicant: NCR INTERNATIONAL INC., Dayton, Ohio 45479 (US)
(72) Inventor: Doss, Gary Lamar, Lawrenceville, Georgia 30044 (US)
(74) Representative: Williamson, Brian

(57) **Abstract**

A frequent shopper program system is described, having a customized user interface for providing a customer with interactive access to a frequent shopper program. Business logic performs frequent shopper program functions in response to frequent shopper program requests inputted by a customer at the customized user interface. The business logic includes programming objects that retrieve frequent shopper program data from a database, perform the requested frequent shopper program functions, and provide an output to the customer at the user interface. The frequent shopper program functions performed by the business logic include point inquiry, account maintenance, offer delivery, and point redemption. A data access layer provides data from the database to the business logic in a normalized format. According to another aspect of the system, the customized user interface is web-based and is implemented as a network of retail kiosks served by a server computer that provides outputs in the form of web pages.

## Description

The present invention relates generally to computerized retail systems, and more particularly to advantageous aspects of systems and methods for providing interactive customer access to a frequent shopper program and for delivering frequent shopper program information to targeted customers.

In today's highly competitive retail environment, it has become increasingly important to provide incentives for frequent shoppers, in order to reward customer loyalty and to encourage repeat business. Although frequent shopper incentive programs vary from retail establishment to retail establishment, there are a number of features that are common to most programs. First, a separate account is opened for each customer participating in the program. Typically, this is accomplished by the customer completing and submitting a paper form. Alternatively, identifying information may be taken over the telephone. Each of these approaches requires the use of the store's valuable human resources and, further, carries with it the possibility of human error in entering of the account information into the store's computer system. In addition, delays may occur where, for example, the store's service desk is backed up, or where a large number of paper applications must be processed.

After the frequent shopper account is opened, the customer is supplied with a temporary identification card until a permanent card can be issued. If the customer subsequently needs to make any changes to their membership information, such as a new mailing address, the customer typically must contact store personnel, who then enter the requested changes. Again, this practice diverts store personnel from other activities and carries with it a possibility of error in the transferring of the information into the store's frequent shopper system.

Once the customer has been enrolled in the frequent shopper program, qualifying purchases made by the customer at the store cause frequent shopper points to be added to the customer's account. When enough points have been accumulated, the customer becomes eligible to receive a reward. The reward can take a number of forms, such as a discount on selected items. The reward may also take the form of a cash rebate or a gift of merchandise that is mailed to the customer's residence. Typically, when the customer elects to receive a reward, a requisite number of frequent shopper points is deducted from the customer's frequent shopper account.

One method used by retail establishments to inform the customer as to the number of frequent shopper points in their account and their eligibility for rewards is to print the information directly onto a point-of-sale (POS) receipt upon the completion of a sale. Although this approach has the advantages of simplicity and convenience, it suffers from the disadvantage of not providing customers with a way of knowing what offers are currently available to them until they have made a purchase. Further, on subsequent shopping trips, the customer may forget to bring the POS receipt with them, and thus lack precise knowledge as to the status of their frequent shopper account.

Alternatively, the retail establishment may provide frequent shopper program offer information to the customer through printed materials, ranging in size from brief statements and circulars to whole catalogs. These materials are either directly mailed to customers or are made available to customers in the store. The customer then collects the reward by clipping coupons and presenting them at the store or providing store personnel with numerical codes appearing in the printed materials. This approach requires a significant number of man-hours to prepare and distribute the printed information and also entails significant expenditures for materials and, in the case of mailings, postage. Further, the use of mailings is inefficient because the mailings may be sent to customers who are not interested in the particular offers contained in the mailings. In addition, certain customers may discard the mailings without realizing that the mailings contain offers of interest to them.

Typical prior art frequent shopper programs further suffer from the disadvantage that there is typically no way for customers to access their frequent shopper accounts, other than by contacting store personnel over the telephone, in writing, or in person, and then having the store employee retrieve the desired information. Further, even knowing how many points may be in the account, the customer may have no ready way of determining which offers, if any, the customer has qualified for. This is further complicated by the practice at many stores of having multiple frequent shopper programs differentiated, for example, by the types of products that the customer has purchased to earn points. In addition, within each separate frequent shopper program, there may be different levels that are attained by crossing various predetermined purchase thresholds.

There is thus a need for a frequent shopper system that provides retail customers with direct, interactive access to their frequent shopper accounts and that allows retailers to more efficiently provide frequent shopper program information directly to targeted customers.

The above-described issues and others are addressed by various aspects of the present invention. According to one aspect, the present invention provides a frequent shopper system comprising a customized user interface for providing a customer with interactive access to a frequent shopper program. The user interface invokes business logic to perform frequent shopper program functions in response to customer inputs at the user interface. These frequent shopper program functions may advantageously include point inquiry, account maintenance, offer delivery, point redemption, as well as others. A data access layer provides data from a frequent shopper program database to the business logic in a normalized format. According to a further aspect of the invention, the customized user interface is web-based and is implemented as a network of retail kiosks served by a server computer that provides outputs to the kiosks in the form of web pages.

According to a first aspect of the present invention there is provided a system, comprising:
a customized user interface for providing a customer with interactive access to a frequent shopper program;
business logic for performing frequent shopper program functions in response to frequent shopper program requests inputted by a customer at the customized user interface, the business logic including programming objects that retrieve frequent shopper program data from a database, perform the requested frequent shopper program functions, and provide an output to the customer at the user interface.

According to a second aspect of the present invention there is provided a method for managing a frequent shopper program, comprising the following steps:
(a) connecting an interactive retail kiosk into a network served by a server computer;
(b) receiving frequent shopper program inputs from a customer at the kiosk;
(c) performing frequent shopper program functions at the server computer in response to customer inputs at the kiosk; and
(d) providing frequent shopper program outputs to the customer at the kiosk.

An embodiment of the present invention will now be described, by way of example, with reference to the accompanying drawings, in which:
Fig. 1 shows a diagram of a first embodiment of a frequent shopper system according to the present invention;
Fig. 2 shows a diagram of the system of Fig. 1, implemented as a network of retail kiosks;
Fig. 3 shows a diagram of programming objects used to implement the business logic component of the system shown in Figs. 1 and 2;
Fig. 4 shows a diagram of the external frequent shopper system shown in Figs. 1 and 2;
Fig. 5 shows a diagram of the customized frequent shopper database shown in Figs. 1 and 2;
Fig. 6 shows a table describing the member data stored in the external frequent shopper system shown in Fig. 4;
Fig. 7 shows a table describing the personal data stored in the external frequent shopper system shown in Fig. 4;
Fig. 8 shows a table describing the reward programs data stored in the customized frequent shopper database shown in Fig. 5;
Fig. 9 shows a table describing the program levels data stored in the customized frequent shopper database shown in Fig. 5;
Fig. 10 shows a table describing the level rewards data stored in the customized frequent shopper database shown in Fig. 5;
Fig. 11 shows a table describing the offer definitions data stored in the customized frequent shopper database shown in Fig. 5;
Fig. 12 shows a diagram illustrating the operation of the system shown in Figs. 1 and 2 in performing account enrollment and maintenance functions;
Fig. 13 shows a diagram illustrating the operation of the system shown in Figs. 1 and 2 in performing account inquiry and offer delivery functions;
Fig. 14 shows a table describing the items to be printed on a point inquiry balance statement;
Fig. 15 shows a table describing the items to be printed on an offer delivery shopping list;
Fig. 16 shows a diagram illustrating the operation of the system shown in Figs. 1 and 2 in performing point redemption functions;
Fig. 17 shows a table describing the items to be printed on a point redemption voucher or receipt;

One aspect of the present invention addresses the above-described issues, and others, by providing a customized user interface including a network of interactive retail kiosks located throughout a retail store. The network of kiosks is served by a server computer having access to the store's frequent shopper program data. The network may include any number of kiosks, or other terminals, depending upon the needs of the particular retail store. The present invention allows retail customers to interact directly with the store's frequent shopper program, gaining direct and immediate access to account and offer information. In addition, because the present embodiment of the invention is web-based, the invention may be used to provide at-home access to the frequent shopper program through an internet connection.

As described below, the present invention may be used in conjunction with a retail store's already existing frequent shopper program. However, it will be appreciated from the following description that the present invention may also be embodied as a stand-alone system, independent of any already existing frequent shopper program. Further, although the present invention is described as being implemented in a retail store in which goods are sold, it may also be used to track customer activity in other types of businesses. For example, the present invention could be used in a casino to track the gambling activity of gamblers who are trying to qualify for "comps" and other incentives.

The use of the present invention in conjunction with a retail store's already existing frequent shopper program raises particular design issues and considerations. Unlike a pricing or an inventory system, a frequent shopper program is a point of differentiation for a retailer. While retailers may use similar tools to track their programs, the actual operation of a frequent shopper program is typically unique to each retailer. Thus, the challenge to the designer of the retail kiosk network is to design a universal system that is readily adaptable to each unique frequent shopper program.

A common denominator of all frequent shopper programs is that an individual customer is assigned a means of identification as part of the program, usually a card that can be scanned or swiped. Being a member of the program gives the customer access to special promotions and offers from the retailer. A feature of most programs is the ability of the customer to earn frequent shopper points based on their activity with the retailer. Points are a tracking mechanism of the customer's activity, such as the amount purchased, items purchased, and frequency of purchases. These points provide the retailer with a means of targeting further special promotions to their most loyal members.

The use of the points in a frequent shopper program differs significantly from retailer to retailer. Each retailer creates a unique program to highlight their commitment to their customers. These programs usually consist of the retailer offering products or discounts that can be redeemed by the customer for the points accumulated in their frequent shopper account. Some retailers even run multiple frequent shopper programs to target more specific sub-groups of customers. For example, a food store with a deli might have both a general frequent shopper program and a deli program that can be accessed by the same customer account.

Because of the unique nature of frequent shopper programs, the present invention is based upon a model of the most common features of such programs. The model includes the following concepts, but may be adapted as desired to suit a different or changing environment:
(a) Frequent shoppers are assigned a member account and are identified using a card that can be scanned or swiped.
(b) The retailer can target special offers to the members. These offers can be for an individual member, a group of members, or the entire program membership.
(c) A retailer may operate multiple frequent shopper programs for each member account.
(d) Where a retail store has multiple frequent shopper programs, there is only one primary program for all accounts. All other programs are optional, depending upon the interest of the individual members.
(e) Each program can have multiple levels within that particular program.
(f) Each level within a program can offer multiple awards that can be redeemed for points.
(g) In addition to awards, the retailer may offer discounts that can be redeemed for points by the members.

Thus, in a first aspect, the present invention provides a system that allows retail customers to open a frequent shopper account by directly entering application information into a retail kiosk, or other terminal. The customer signing up for the new account is provided with a temporary form of account identification so that they can immediately use the account, and is shortly thereafter provided with a permanent identification card. Because the customer performs the signup function directly, and reviews the information as it is entered into the system, the customer is isolated from delays and mistakes related to the processing of paper forms for the same purpose.

After the frequent shopper account has been opened, the customer gains interactive access to the account by swiping their identification card at a card reader at a retail kiosk or, alternatively, by using a keypad at the kiosk to input identification information. For added security, the presently preferred embodiment of the invention provides for the use of a personal identification number (PIN) in conjunction with the customer's permanent identification card. As described below, the customer may access the system in order to perform account maintenance functions, such as updating their address and identification information or signing up for additional programs. In addition, a kiosk may be used to print out a temporary identification card, should the customer's permanent card be unavailable. Also, the kiosk may be used to order a replacement card, should the original card be lost or destroyed.

The customer uses direct kiosk access to determine their current number of points and to learn what offers the customer is eligible for. As described below, according to one aspect of the invention, the kiosk prints out an offer shopping list that contains an itemized listing of all of the offers and other incentives for which the customer is eligible. Thus, the present invention provides a retail store with the ability to communicate particular marketing information directly to a targeted customer or group of retail customers. Further, the user interface may be configured to supply extended product information for each of the items offered on the shopping list. As described below, according to a further aspect of the invention, kiosks within a retail store may be configured to provide a streamlined set of services in high-traffic areas and a more comprehensive set of services in low-traffic areas.

The retail kiosks are also used to redeem accumulated frequent shopper program points. As described below, the kiosks are used to print vouchers, or coupons, that are presented to a cashier at a point-of-sale (POS) terminal when the customer purchases the items for which the frequent shopper points have been redeemed. The system may optionally be configured such that the frequent shopper points are deducted from the customer's frequent shopper account when the initial request is made at the retail kiosk or, alternatively, only when the final sale at the POS terminal has been completed.

According to a further aspect of the invention, web-based technologies are used in creating the user interface. In a present embodiment of the invention, the retail kiosks are networked locally within a retail store. However, because the user interface is web-based, the invention may be readily expanded for use over the internet. This expansion would allow a retailer to use off-site kiosks or other terminals to provide customers with access to their frequent shopper accounts. In addition, customers would be able to access their accounts using their home computers.

The present invention has a number of advantages over the prior art. First, the customer may open a new frequent shopper account or modify an existing account using direct, interactive access to the retail store's computer network. This immediacy of processing increases customer satisfaction, as the customer no longer has to fill out paper forms or contact the retailer's service personnel in order to sign up for a new account or update and old one. The customer gets faster service on their accounts due to the reduced overhead of processing paper forms or verbal communications of account changes. Further, the customer no longer has to wait in line at a service desk. This aspect also serves to free service personnel to address other customer issues.

Another advantage is that the customer is provided with continuing direct, interactive access to their frequent shopper account information. As part of this access, the customer may be provided with a shopping list printout of the offers available to them. The present invention increases customer satisfaction, as the customer no longer has to worry about bringing membership circulars or other printed material to the retailer's establishment in order to enjoy the benefits of their membership. The customer can instead interactively check the status of their accounts and get a shopping list of special offers at any time. By providing easy, interactive access to their accounts, the retailer can provide for increased customer loyalty through better and more visible use of the retailer's frequent shopper program. Further, by providing customers with a shopping list of special offers available to them individually during their shopping on that day, each customer has more incentive to purchase the offered items. This increases traffic in the store and can promote purchases of other goods and services by the customer beyond those that are the subject of special offers. Another advantage is that the present invention aids customers in deciding on when to redeem their frequent shopper points. Because the customer can now view his or her account status and program reward and discount information all in one interactive setting, the customer can make a more informed decision as to when to redeem accumulated frequent shopper points.

In addition, the present invention is designed to take advantage of extended product information that may already be available in a retail store's databases. This extended product information can be combined with the customer's frequent shopper account information to provide detailed descriptions of program rewards and discounts, including price, location, availability, pictures, and detailed descriptions. This detail allows the retail store's frequent shopper program marketing efforts to be conducted more efficiently and effectively.

Further, the retailer may use the invention to increase customer awareness of a frequent shopper program and to increase the flexibility and effectiveness of the program. The kiosks may be positioned strategically throughout the store, and may provide a running display that advertises the benefits conferred by the frequent shopper program. The advertising may be targeted to both current and potential future members. In addition, the retailer may use the invention to credit points to a customer's frequent shopper program account based upon use of the kiosk or other customer actions. Also, because the definition of the program rewards and discounts are stored in a database, the retailer has more flexibility in defining what products are available to program members.

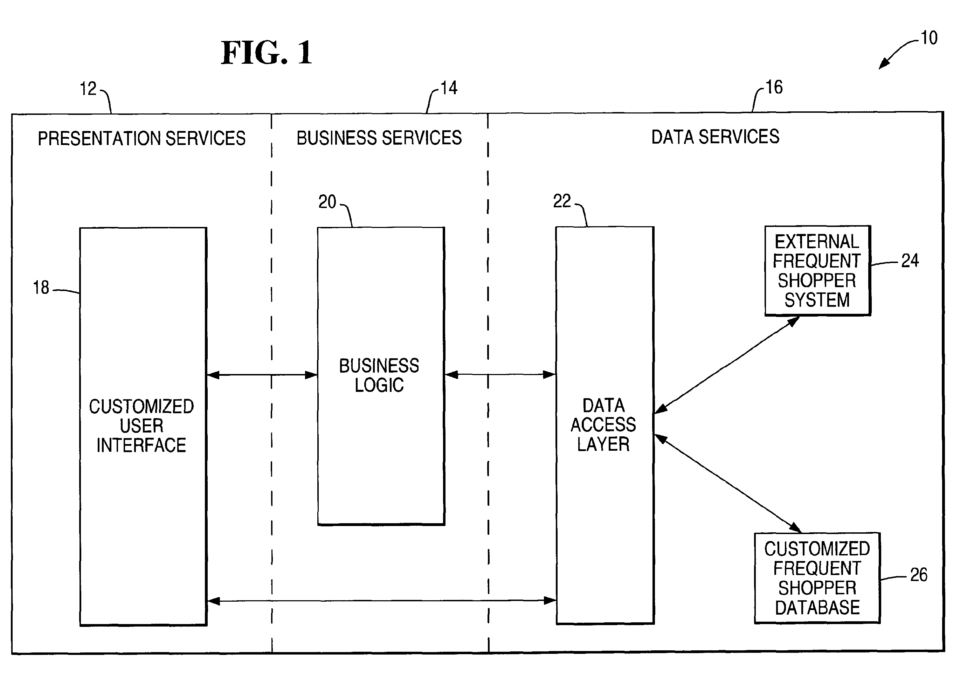

Fig. 1 shows a diagram of the overall architecture of a frequent shopping system 10 according to a first embodiment of the present invention. As shown in Fig. 1, the system 10 comprises three tiers, a presentation services tier 12, a business services tier 14, and a data services tier 16.

The presentation services tier 12 includes a customized user interface 18 that provides the hardware and software interfaces required to provide a retail customer with interactive access to the business services and data services tiers 14 and 16. In a first embodiment of the invention, the user interface 18 includes a network of retail kiosks and a customized web-based software interface. The user interface 18 enables consumers in a store to access their frequent shopper account and display or print their account information. The user interface 18 supports a number of functionalities. It supports configurable personal identification number (PIN) sizes and supports visual security of PIN keypad entries. It supports configurable formats for alternate IDs, including configurable sizes for the ID value, and supports configurable prompts for alternate ID entry to distinctly request the ID. It supports display of the configured primary award program and additional award programs on request. It prints frequent shopper receipts on a local 40-column receipt printer and provides instructions on how to retrieve a printout. It displays a base attract loop with instructions on how to access a frequent shopper account. The base attract loop can be combined with a product promotion component to include additional promotional information in the loop. In addition, the user interface 18 can be configured to display messages that are targeted to specific customers.

Further, in connection with the below-described account maintenance functions performed by the system 10, the user interface 18 supports changing of personal identification data by sequencing through a subset of personal identification data and directly selecting the item to be changed. It supports the ability to skip personal identification data fields that are not required. In connection with the below-described offer delivery functions performed by the system 10, the user interface 18 supports viewing of offers by both members and non-members, and supports viewing of offers by offer type. In addition, the user interface 18 displays configurable information while the offer delivery shopping list is printing, and displays instructional information and a suitable graphic when the offer delivery shopping list has finished printing. In connection with the below-described point redemption functions performed by the system 10, the user interface 18 supports both online and external point redemption. It supports selection of a reward/discount by a frequent shopper member. It supports viewing of rewards by both program members and non-members. It supports separate viewing of reward items versus reward discounts. It supports entry of search criteria, excluding price, for frequent shopper rewards.

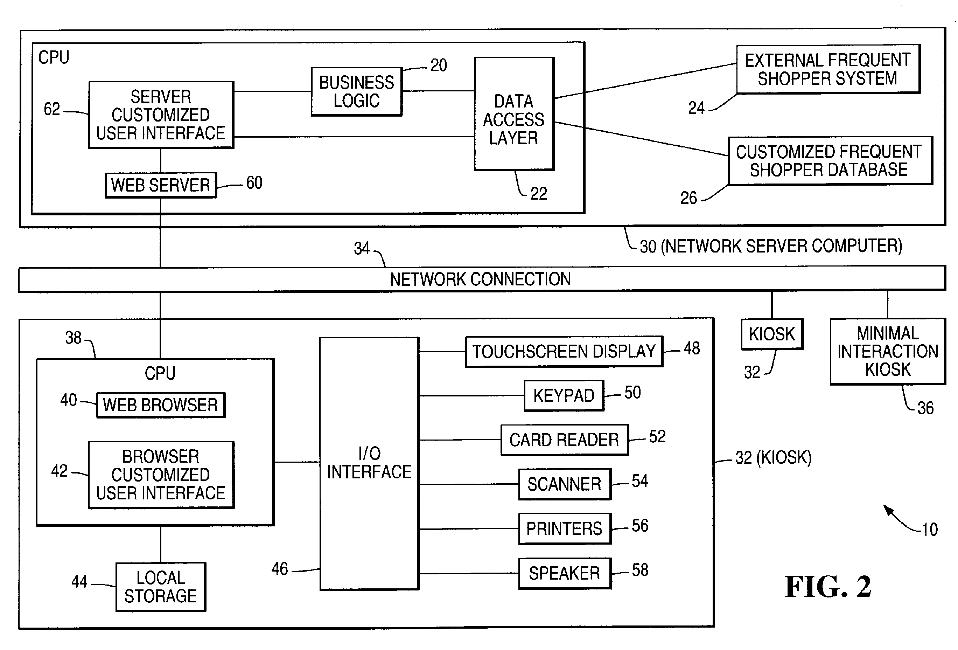

The business services tier 14 includes business logic software 20 that, in response to a customer request at the user interface 18, performs various frequent shopper program functions in conjunction with the data services tier 16. As described below, in a first embodiment of the invention, the business logic 20 is centrally located at a server computer, such as server computer 30 of Fig. 2, that serves the network of retail kiosks in the user interface 18.

The data services tier 16 includes a data access layer 22 that provides access to an external frequent shopper system 24 and a customized frequent shopper database 26. The external frequent shopper system 24 is a frequent shopper system, external to the present invention, that contains frequent shopper program data to be accessed by the present invention. The external system 24 may, for example, be a retail store's already existing frequent shopper system. The customized frequent shopper database 26 contains data specific to the present invention. There may be a significant amount of overlap between the data contained in the two databases 24 and 26. Much of the customized database 26 can be populated directly from the external system 24 in an automatic batch operation. The data access layer 22 provides data from the two databases 24 and 26 to the user interface 18 and the business logic 20 in a normalized format.

Fig. 2 shows a diagram of the frequent shopper system 10 shown in Fig. 1, implemented as a network of retail kiosks 32. The system 10 includes server computer 30 that administers the network of retail kiosks 32 through a network connection 34. The network connection 34 may be local to the retail establishment or may optionally be implemented using an internet connection. The use of an internet connection would allow some or all of the retail kiosks 32 to be located off-site. In addition, customers could gain access to the frequent shopping system 10 through their home computers.

In the present embodiment of the invention, each kiosk 32 includes a PC-based workstation or personal computer that has been assembled into a suitable housing. Such a housing, for example, would include a display at a comfortable height when viewed by a typical customer in a standing position, as well as user input and output devices that are positioned for easy access. Alternative housings may be provided for use by customers in wheelchairs or by children. As described in further detail below, certain kiosks in the network may be configured as minimal interaction kiosks 36. These kiosks 36 are configured to perform a streamlined subset of the total functions performed by the frequent shopper system 10. For example, as described below, it may be desirable to configure these kiosks 36 for use in high-traffic areas. The high-traffic kiosks would be configured to perform only those functions of the frequent shopper system 10 that can be performed in a relatively short amount of time, such as the delivery of offer information. The minimal interaction kiosks 36 allow shoppers to quickly receive printouts of offer shopping lists without having to wait an inordinate amount of time in a line. Of course, minimal interaction kiosks 36 would be provided with signage to indicate the specific functions performed by those kiosks, and provide the customer with information regarding the location of nearby full-service kiosks 32. Such information may also be contained in customized display screens that are shown at the minimal interaction kiosks 36.

The kiosk CPU 38 runs a standard web browser 40. In a presently preferred embodiment of the invention, the web browser used is Microsoft Internet Explorer 4.01, running on a Windows NT Workstation, version 4.0, operating system platform. Of course, other browsers and operating systems may be used without departing from the spirit of the present invention. The browser 40 is adapted for use in the current invention by providing a browser customized user interface 42 that is implemented using DHTML/JavaScript. The browser customized user interface 42 includes customized display screens for receiving'inputs from, and providing outputs to, customers using the kiosk 32. The kiosk 32 further includes suitable local storage 44 that includes short-term and long-term storage media to facilitate the operation of the CPU 38 in running the web browser 40 and customized user interface 42. The local storage 44 may be used, if desired, to store data downloaded from the network server computer 30.

As mentioned above, the kiosk 32 may advantageously be configured to display an attract loop, when the kiosk 32 is not being used by a customer. The attract loop includes a repeating series of text, graphics and sounds that are designed to attract customers to the kiosk 14, and provide general information to the customer about the frequent shopper system 10. The attract loop may be omitted in connection with various functions, as desired. For example, the retailer may choose to omit the attract loop at a minimal interaction kiosk 36.

The input-output (I/O) interface 46 shown in Fig. 2 includes the drivers and other hardware and software required to allow the CPU 38 to control the kiosk's input and output devices. In the present embodiment of the invention, these devices include a touchscreen display 48, a keypad 50, a card reader 52, a scanner 54, printers 56, and a speaker 58. The particular choice and configuration of input and output devices may be modified, depending upon the needs of the retailer, without departing from the spirit of the invention. For example, a full keyboard may be provided to facilitate the entry of data containing a significant amount of text. If desired, a mouse or trackball may be included to assist the customer in making menu selections and inputting data. Also, the kiosk 32 may include suitable devices to implement voice recognition, and other input and output functions.

As described in further detail below, the kiosk CPU 38, running the web browser 40 and browser customized user interface 42, provides audio and visual outputs to a retail customer at the kiosk 32. These outputs include customized web pages and audio files containing instructions to the customer, frequent shopper program information, and extended product information. The kiosk CPU 38 receives inputs from the customer in the form of selections entered on the touchscreen display 48, keystrokes on the keypad 50, information contained on a card bearing a magnetic stripe that is read by the card reader 52, or bar-coded information that is read by the scanner 54. The customer inputs are communicated through the network connection 34 to the network server computer 30.

In a presently preferred embodiment of the invention, the browser customized user interface 42 is menu-driven. Each display screen contains menu selections that are configured as "buttons" that are actuated by finger pressure at the touchscreen display 48. However, other techniques for providing menu choices to a customer and for receiving customer inputs may also be employed without departing from the spirit of the present invention.

As shown in Fig. 2, the server computer 30 includes a CPU 60 that runs a standard web server 62. In the presently preferred embodiment of the invention, the web server 62 is provided by Microsoft Internet Information Server, running on a Microsoft Windows NT operating system platform. However, it will be appreciated that the server computer 30 may use other server software and operating systems without departing from the spirit of the present invention. The web server 60 is adapted for use in the present invention by a server customized server user interface 62. In the present embodiment of the invention, the server customized user interface 62 is implemented using active server pages (ASPs) and VBScript coding that invoke the business logic 20, discussed below, with underlying support from other programming objects and customization dynamic link libraries (DLLs).

An active server page is a hypertext markup language (HTML) web page that includes one or more scripts (i.e., embedded programs) that are processed by the server computer 30 before the page is sent to the customer at the retail kiosk 32. Thus, the script in the web page at the server computer 30 uses inputs received as the result of a customer's request at a kiosk 32 for access to the retail store's frequent shopper program, and then builds and formats the web page before sending it back to the customer at the kiosk 32.

In the present embodiment of the invention, the business logic 20 is implemented as a set of component object model (COM) objects that are constructed using object-oriented programming techniques. In operation, when a customer identifies at a kiosk 32 particular frequent shopper program functions to be performed, the ASP script of the server customized user interface 62 invokes business logic COM objects, as needed, to perform the requested functions. The particular COM objects 44 that are invoked during a given customer session at a kiosk 14 depend upon which aspects of the invention are required to perform the particular functions requested by the customer. The business logic COM objects gather required data from the external frequent shopper system 24 and the customized frequent shopper database 26, using the data access layer 22. After the requested functions have been performed, which may include providing suitable outputs to the customer at the kiosk 32 and updating the databases 24 and 26, the COM objects are then released.

The data access layer 22 provides an interface between the two databases 24 and 26 and the other components of the system 10. Typically, an external frequent shopper system 24 does not have a standard format. Thus, the data access layer 22 provides a normalized format to allow the frequent shopping system to access data from the external frequent shopper system 24. A data access layer suitable for use with the present invention is described in United States Patent Application Serial No. , assigned to the assignee of the present application, which is being filed on the same date as the present application, and which is incorporated by reference herein in its entirety.

It should be noted that although the present embodiment of the invention is designed for use with an already existing external frequent shopper system 24, it will be apparent that the present invention may also be implemented in an independent format. Such a format would be used, for example, where a retail store is establishing a frequent shopper program for the first time or where a retail store wishes to discard its old program in favor of a completely new one. Further, it should also be noted that although Fig. 2 shows the external frequent shopper system 24 and the customized frequent shopper database 26 as being located on the network server computer 30, it will be apparent that these components of the system may be located on other computing units without departing from the spirit of the present invention.

The frequent shopper program functions performed by the system 10 include creating a new frequent shopper account, updating and maintaining a current frequent shopper account, retrieving requested account information, assembling shopping lists and other account status and offer information to be communicated back to the customer at the kiosk 32, and redeeming offers. Other operations, described below, are also performed as part of the present invention.

The web server 60 and user interface 62 provide outputs to the kiosk 32 in the form of hypertext markup language (HTML). The HTML outputs are then converted into final form at the kiosk 32 by the web browser 40 and browser user interface 42 for display as interactive web pages. In addition, if desired, audio outputs may also be provided at the kiosk speaker 58. The audio outputs may be transmitted to the kiosk 32 together with the HTML outputs. Alternatively, audio files may be stored in the local storage 44 for playback, as appropriate.

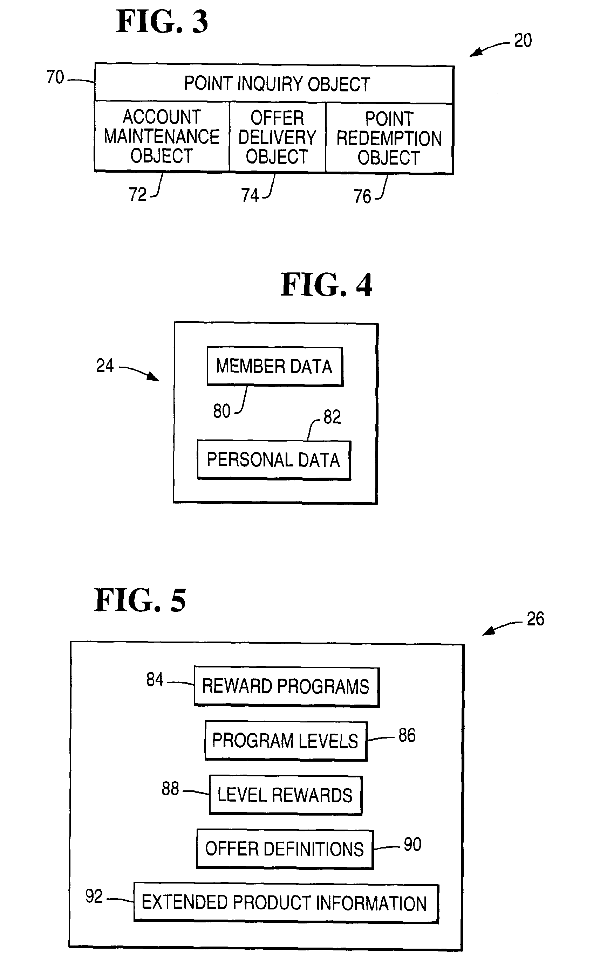

Fig. 3 shows a diagram of one embodiment of the business logic 20 of the frequent shopper system 10. As mentioned above, the business logic 20 is implemented as COM objects that are invoked, as needed, and then released after completing the requested functions. As shown in Fig. 3, the business logic 20 includes four COM objects: a point inquiry object 70, an account maintenance object 72, an offer delivery object 74, and a point redemption object 76. The point inquiry object 70 enables the customer to access information about the customer's frequent shopper account. The account maintenance object 72 enables the customer to open a new frequent shopper account and to make modifications to one or more personal identification data components in an already existing frequent shopper account. The offer delivery object 74 enables a customer to access information about available offers. Finally, the point redemption object 76 enables a customer to redeem points from the customer's account for retailer-assigned items or discounts. The point inquiry object 70 is common to the other three objects 72, 74, and 76, and serves to coordinate the lookup of frequent shopper program information for these objects. Thus, whenever any of these other objects 72, 74, or 76 is invoked, the point inquiry object 70 is also invoked. In addition, as described below, the point inquiry object 70 and the account maintenance object 72 create local data storage objects for locally storing member and personal data and updates to these data. The operation of the COM objects 70, 72, 74, and 76 in performing various frequent shopper program functions is described in further detail below.

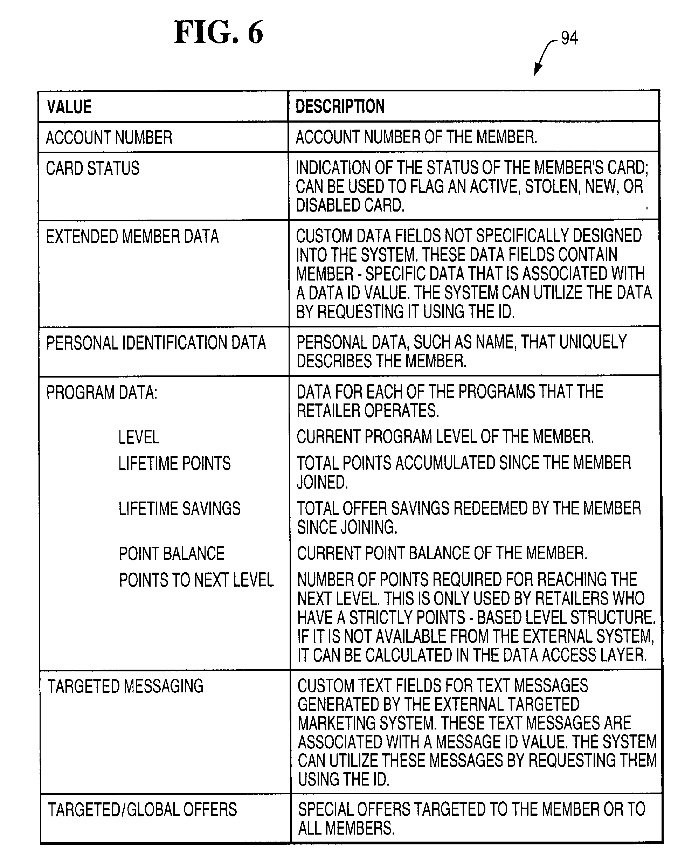

Figs. 4 and 5 show, respectively, diagrams of the external frequent shopper system 24 and the customized frequent shopper database 26. As shown in Fig. 4, the external frequent shopper system 24 includes two types of data that are accessed by the business logic 20: member data 80 and personal data 82. Member data 80 includes data in the external system 24 that is specific to the customer's membership in the frequent shopper program. Fig. 6 shows a table 94 describing the data included in this category.

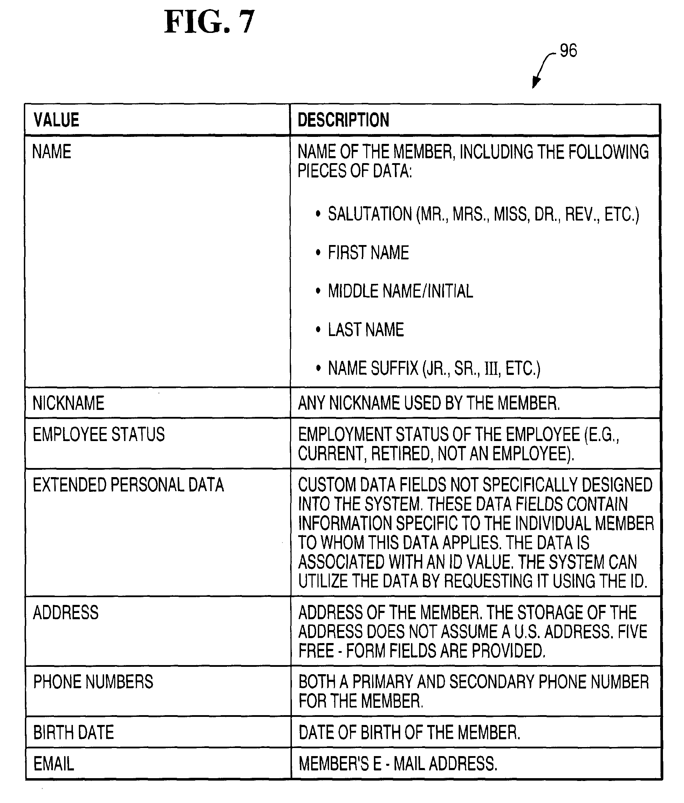

Personal data 84 in the external frequent shopper system 24 includes the customer's personal identification information. Fig. 7 shows a table 96 describing the data included in this category. The reason that customer data is divided into member data and personal data is to allow the retail customer's personal data to be efficiently transportable to other applications that may also be running within the retail kiosk system. For example, the retail kiosk system may include a gift registry, or other application that requires the use only of the personal information associated with a particular member of the frequent shopper program.

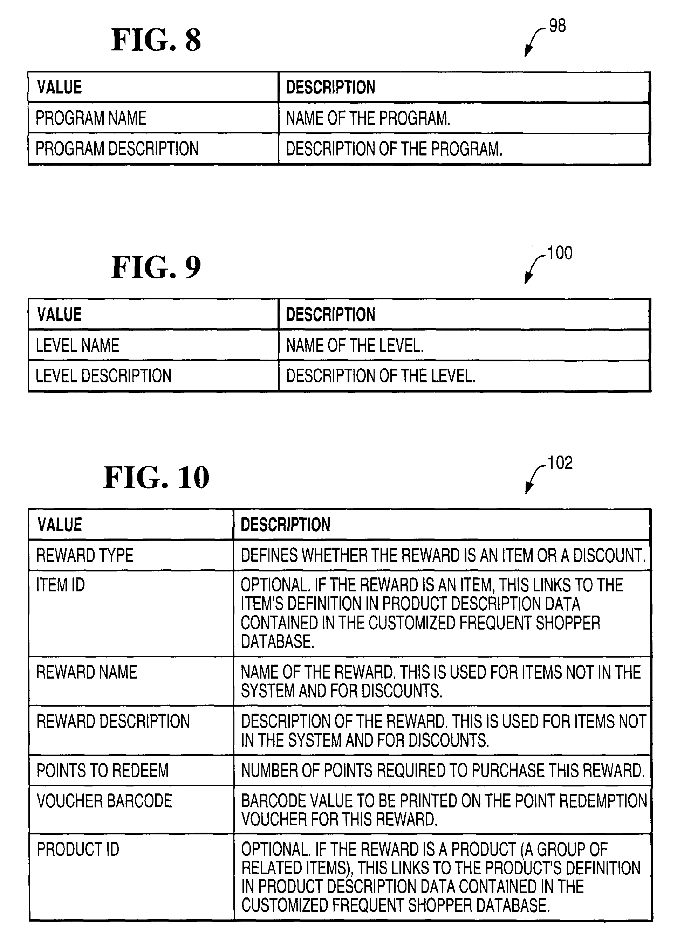

As shown in Fig. 5, the customized frequent shopper database 26 includes reward programs data 84, program levels data 86, level rewards data 88, offer definitions data 90, and, optionally, extended product information 92. Reward programs data 84 includes the name and description of each frequent shopper program, and program levels data 86 includes the name and description of each level within a program. Figs. 8 and 9 show, respectively, tables 98 and 100 describing the data included in reward programs data 88 and program levels data 90. Level rewards data 90 includes data as to the type, name, and description of the reward, and the number of points required to purchase the reward. Fig. 10 shows a table 102 describing the data included in level rewards data 92.

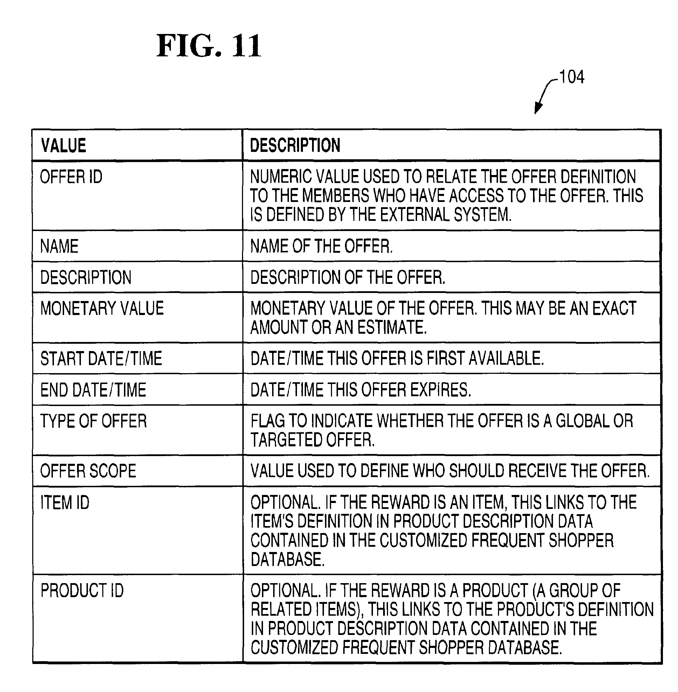

The offer definitions data 90 contains definitions by the retailer of the offers available to program members. Offers can be grouped or categorized as (1) available to all customers, regardless of membership in the frequent shopper program; (2) available to all members of all of the store's frequent shopper programs; (3) available to all members of a particular frequent shopper program; or (4) targeted offers that are only available to specific members identified by the external frequent shopper system 24. Each offer may be optionally linked to extended product information 92 contained in the customized frequent shopper database 26. Fig. 11 shows a table 104 describing the data included in offer definitions data 92.

The customized frequent shopper database 26 is populated by the retailer as part of the installation of the system 10. Typically, much of the data to be stored in the customized frequent shopper database 26 already exists in some form in the external frequent shopper system 24. This common data may be transferred in a suitable form to the customized frequent shopper database 26 through the use of an automatic batch operation.

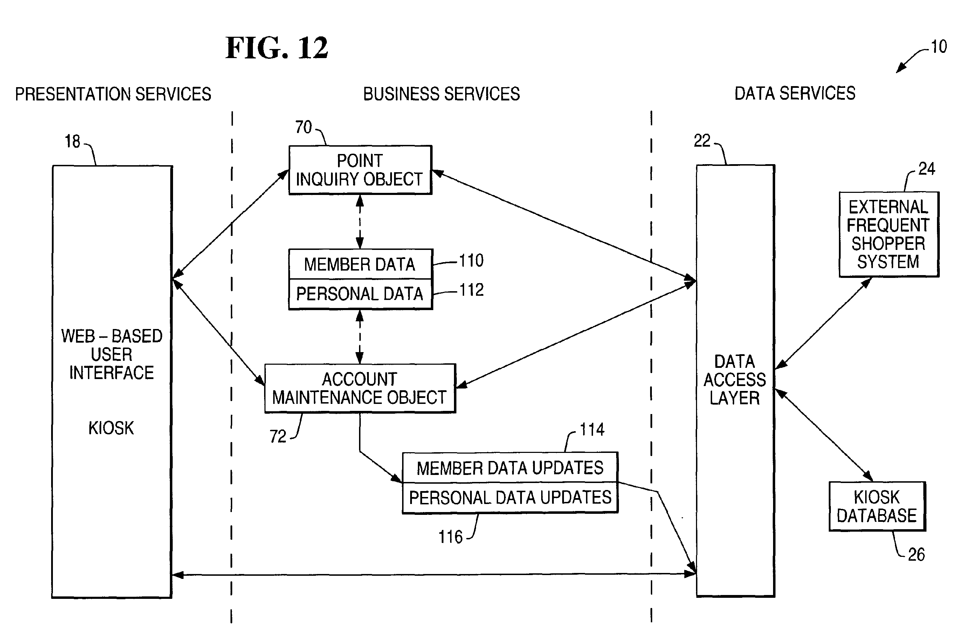

Fig. 12 is a diagram illustrating the operation of the frequent shopping system 10 in performing account enrollment and maintenance functions. When an account maintenance or enrollment function is requested by a customer through the user interface 18, the user interface 18 invokes the point inquiry object 70 and the account maintenance object 72. The point inquiry object 70 in turn creates a member data object 110 and a personal data object 112 for locally storing member and personal data retrieved from the external frequent shopper system 24 through the data access layer 22. The locally stored member and personal data is then used by the account maintenance object 72 to perform account maintenance functions, typically involving the updating of member and personal information. The account maintenance object 72 creates a member data updates object 114 and a personal data updates object 116 for locally storing update information until it is writing to the external frequent shopper system 24.

Normal customer operation of the interface 18 for account enrollment includes the following:
(a) A customer approaches a kiosk and selects a menu option on a display screen to enroll in a frequent shopper account.
(b) The user interface prompts the customer to enter the data required for account enrollment in the member and personal data updates objects 114 and 116. The customer uses a keyboard or other suitable input device to enter the enrollment data into a display screen.
(c) When the customer is satisfied that the entered information is correct, the customer makes an appropriate menu selection on the display screen.
(d) The user interface then invokes the account maintenance object 72 to create a new account based on the data stored in the member and personal data updates 114 and 116.
(e) The account maintenance object 72 requests the creation of a new account from the external frequent shopper system 24, using the data access layer 22.
(f) The external frequent shopper system 24 creates the account and returns the account ID number.
(g) The user interface then prints a temporary form of identification for the customer and updates the display to show the account information for the newly created account.

After a new account has been opened, the customer may interactively perform account maintenance as follows:
(a) A customer approaches a kiosk and is identified by swiping or scanning a frequent shopper card and entering a PIN number. Alternatively, the customer may be identified by manually entering an alternate ID value at a keypad. When the customer logs in by alternate ID, the user interface can optionally be configured to print a temporary, bar-coded receipt that the customer can use for subsequent identifications on that shopping day.
(b) The user interface 18 invokes the point inquiry object 70 to request the member information from the data access layer 22. This request results in the population of the member and personal data objects 110 and 112 to be used during the customer's session on the kiosk.
(c) The kiosk displays an account status screen that identifies the customer and provides account information.
(d) The customer then makes a suitable menu selection related to the performance of an account maintenance function.
(e) The user interface prompts the customer to identify the changes to be made and gathers the data for the changes. These updates are stored in the member and personal data updates storage 114 and 116.
(f) When the customer is satisfied with the changes, an appropriate menu selection is made to apply the changes to the account.
(g) The user interface 18 then invokes the account maintenance object 72 to apply the member and personal data updates 114 and 116 to the customer's account using the data access layer 22 to the external frequent shopper system 24.
(h) When the account maintenance object finishes the update, the user interface 18 is refreshed to display the newly applied changes.

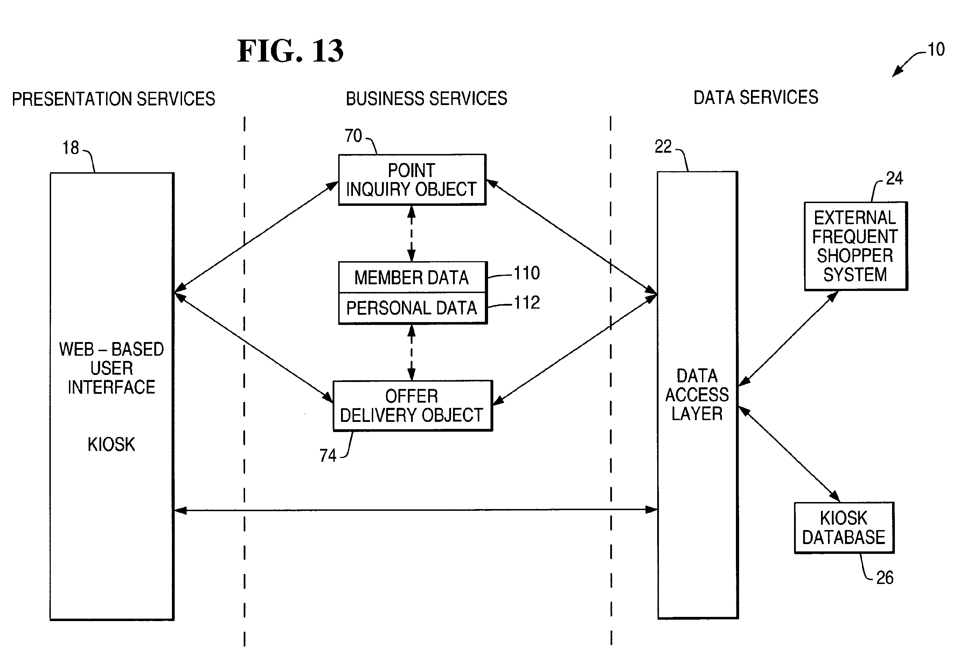

Fig. 13 illustrates the operation of the present invention to provide customers with direct access to their account information and, further, to provide customers with information regarding offers for which they are eligible. As shown in Fig. 13, when these functions are requested by a customer at the user interface 18, the user interface 18 invokes the point inquiry object 70 and the offer delivery object 74. Again, the point inquiry object 70 creates a member data object 110 and a personal data object 112 to locally store member and personal data retrieved from the external frequent shopper system 24 through the data access layer 22. The offer delivery object 74 uses this locally stored data in the performance of the requested functions.

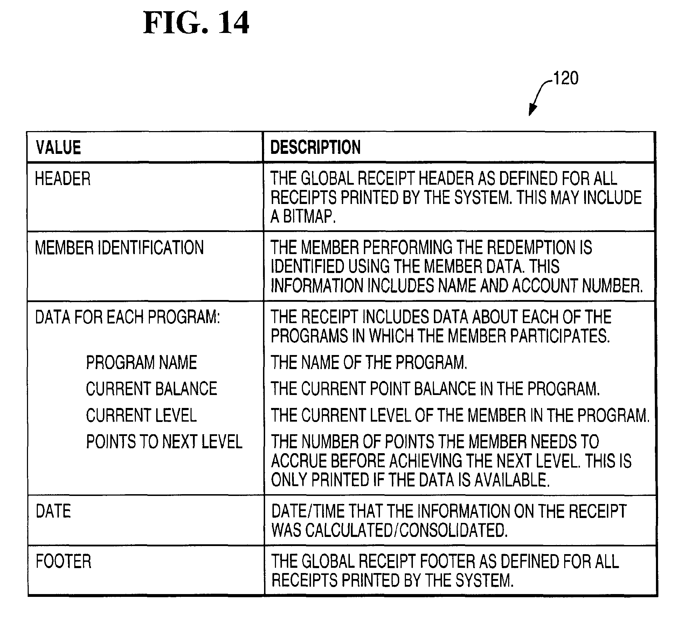

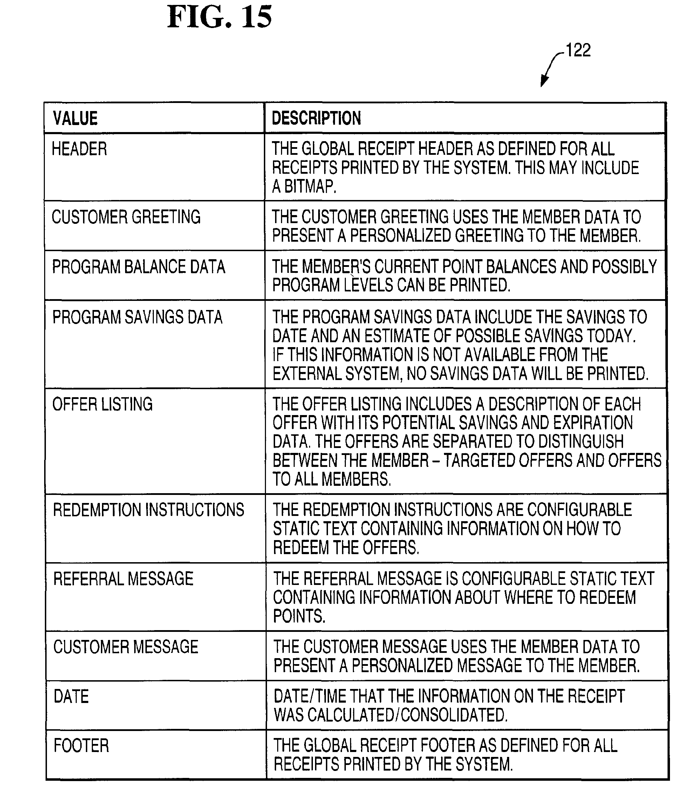

The customer may request a point inquiry balance statement, which provides the customer with a printed statement of the customer's status in frequent shopper programs in which that customer participates. The formatting and printing of the receipt is handled by the user interface 18. Fig. 14 shows a table 120 describing the items included on the printed receipt. Further, as mentioned above, offer information may be provided to the customer in the form of a printed offer delivery shopping list. The formatting and printing of the shopping list is handled by the user interface 18. Fig. 15 shows a table 122 describing the items included on an exemplary shopping list.

As mentioned above, the present embodiment of the invention includes two separate modes of operation in performing the frequent shopper program offer delivery functions. The first mode of operation is a minimal interaction interface that is used in high-traffic areas, such as the entrance to the store. The range of customer interaction at a kiosk operating in this mode is pared down to prevent a backup of customers waiting to use the kiosk. The second mode of operation is a full interaction interface that is used in lower traffic areas, where there is a decreased likelihood of a long line of customers forming. Thus, the full interaction interface provides for customer interaction that may require significantly more time to perform than those customer actions to be performed at a kiosk running the minimal interaction interface.

Normal customer operation of a kiosk running in its minimal interaction interface mode includes the following:
(a) Customers approach a kiosk and identify themselves by swiping or scanning a frequent shopper card at the card reader and entering a PIN number. Alternatively, customers may be identified by manually entering an alternate ID value at the keypad. When a customer logs in by alternate ID, the kiosk can optionally print a temporary, bar-coded receipt that the customer can use for subsequent identifications throughout that shopping session.
(b) Once the identification information has been inputted, the user interface 18 invokes the point inquiry object 70 to request the member information from the data access layer 22. This request results in the population of the member and personal data objects 110 and 112 to be used during the customer's session at the kiosk.
(c) The kiosk then displays an account status screen that identifies the customer, provides account information, and prints out the member's offer shopping list.
(d) After a predetermined amount of time, the user interface logs out the current customer automatically if they have not manually logged out.

Normal customer operation of a kiosk running in its full interaction interface mode includes the following:
(a) Customers approach the kiosk and identify themselves either by swiping or scanning a frequent shopper card at the card reader or by manually entering an alternate ID value at the keypad. When the customer logs in by alternate ID, the kiosk can optionally print out a temporary, bar-coded receipt that the customer can use for subsequent identifications.
(b) The user interface 18 invokes the point inquiry object 70 to request the member information from the data access layer 22. This request results in the population of the member and personal data objects 110 and 112 to be used during the customer's session on the kiosk.
(c) The kiosk displays an account status screen that identifies the customer, provides account information, provides the capability to browse available offers, and optionally prints out the member's offer shopping list.
(d) The customer can then make appropriate selections at the kiosk to view specific offer information. This information can include extended product information, including price, location, availability, product graphics, and detailed product descriptions.
(e) The customer can continue to browse offers until they exit the browsing session.

In addition, non-members may use the full-interactive user interface kiosk at any time to view offer information. Non-members can view offers available to everyone and, optionally, offers available to all program members. Non-members have the same browsing capabilities as members. However, non-members will not see an account screen and are informed that they are ineligible for any member offers that may be displayed.

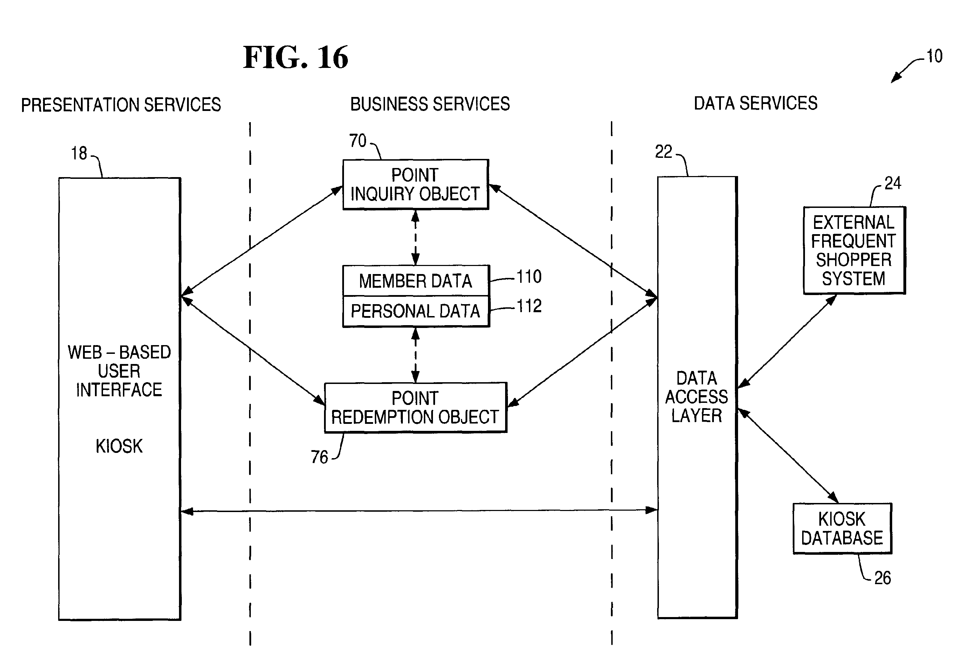

As mentioned above, another aspect of the present invention is to use the customer's immediate interactive access to their frequent shopper program accounts to give the customer control over when to redeem points from a program and to allow the customer to choose the reward or discount to be redeemed. These functions may also be provided at the customer's home by providing home-based internet access to the frequent shopper program accounts. This aspect of the invention is illustrated in the diagram shown in Fig. 16.

As shown in Fig. 16, when the point redemption function is requested by the customer at the user interface 18, the user interface 18 invokes the point inquiry object 70 and the point redemption object 76. The point inquiry object 70 in turn invokes the member data object 110 and the personal data object 112 to locally store data retrieved from the external frequent shopper system 24 through the data access layer 22. The point redemption object 76 uses the locally stored member and personal data to perform the redemption function.

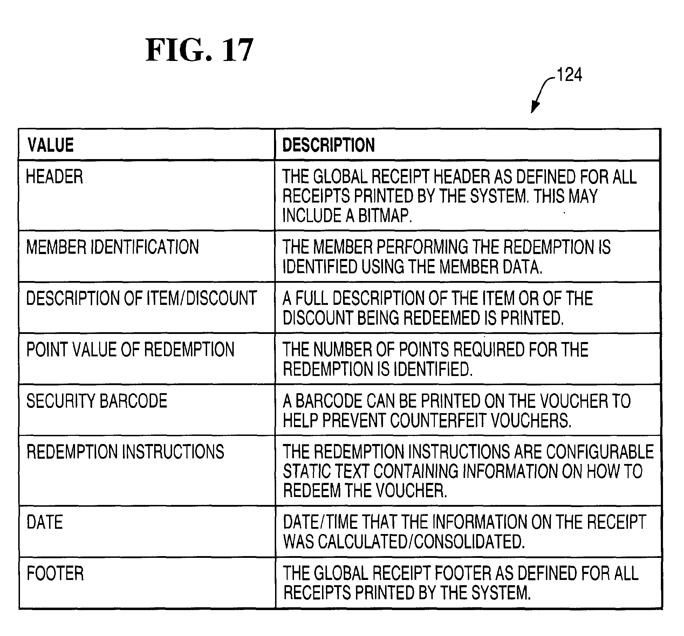

Normal operation of the system to perform the redemption function includes the following:
(a) Customers approach a kiosk and identify themselves by either swiping or scanning a frequent shopper card or by manually entering an alternate ID value in the interface. When the customer logs in by alternate ID, the user interface can optionally print a temporary, bar-coded receipt that the customer can use for subsequent identifications.
(b) The user interface 18 invokes the point inquiry object 70 to request the member information from the data access layer 22. This request results in the population of member and personal data local storage 112 and 114 to be used during the customer's session at the kiosk.
(c) The kiosk displays an account status screen that identifies the customer, provides account information, and allows the customer to browse available awards and discounts.
(d) The customer can browse to a specific reward or discount and elect to redeem points for the selected reward or discount.
(e) The user interface invokes the point redemption object to handles the process of redeeming points from the customer's frequent shopper account. There are two forms of point redemption, online and offline. Online redemption indicates that the points are immediately deducted from the data stored in the external frequent shopper system through the use of the data access layer. In this scenario, the customer is provided with an optionally bar-coded voucher for the reward or discount. This voucher is tenderable media to be used at a POS workstation when purchasing the item associated with the reward or discount. Offline redemption allows the customer to retrieve an optionally bar-coded voucher to be presented during the POS transaction that includes the item associated with the reward or discount. This voucher has no inherent value, since no points were deducted from the customer's account. When the voucher is used in a POS transaction, the associated points are deducted from the customer's account through the standard mechanisms supported by the POS system and frequent shopper systems. Fig. 17 shows a table 124 that describes the items to be printed on the voucher. The vouchers that are printed when a frequent shopper program reward is redeemed can include a barcode to help prevent the creation of counterfeit vouchers. The assignment, use, and tracking of these barcodes is the responsibility of the retailer. To further enhance the security of the barcode, the retailer may customize the voucher receipt to incorporate transaction data into the barcode for the reward that is stored in the customized frequent shopper program database.
(f) The customer can continue to browse and redeem points, as allowed by their point total.

Non-members can use the kiosk at any time to view the rewards and discounts that are available to program members. Non-members have the same browsing capabilities as members. However, they will not see an account status screen and are not allowed to redeem points, since they are not members.

While the foregoing description includes details which will enable those skilled in the art to practice the invention, it should be recognized that the description is illustrative in nature and that many modifications and variations thereof will be apparent to those skilled in the art.

## Claims

1. A system, comprising:
a customized user interface for providing a customer with interactive access to a frequent shopper program;
business logic for performing frequent shopper program functions in response to frequent shopper program requests inputted by a customer at the customized user interface, the business logic including programming objects that retrieve frequent shopper program data from a database, perform the requested frequent shopper program functions, and provide an output to the customer at the user interface.

2. A system as claimed in claim 1, wherein the business logic includes objects for locally storing data retrieved from the frequent shopper program database.

3. A system as claimed in claim 1 or claim 2, including a data access layer for providing data to the business logic in a normalized format.

4. A system as claimed in claim 3, wherein the data access layer provides data to the business logic from an external frequent shopper system in a normalized format.

5. A system as claimed in any preceding claim, wherein the customized user interface is web-based.

6. A system as claimed in any preceding claim, wherein the business logic includes a point inquiry object for retrieving frequent shopper program member data from a frequent shopper program database and storing the retrieved data in a local member data object.

7. A system as claimed in any preceding claim, wherein the business logic includes an account maintenance object that, in response to customer inputs at the user interface, performs account maintenance functions on the customer's frequent shopper account.

8. A system as claimed in any preceding claim, wherein the offer delivery object retrieves offer information from a frequent shopper program database and provides the offer information to the customer at the user interface.

9. A system as claimed in any preceding claim, wherein the customer interface is configurable in one of two modes:
a minimal interaction mode, in which the offer delivery object retrieves and outputs offer information from the database; and
a full interaction mode, in which in addition to retrieving and outputting offer information from the database, the offer delivery object also retrieves extended product information from the database for outputting to the customer.

10. A system of as claimed in any preceding claim, wherein the business logic includes a point redemption object for processing the redeeming of points from the customer's frequent shopper program account in a frequent shopper program database in response to a customer request at the user interface.

11. A method for managing a frequent shopper program, comprising the following steps:
(a) connecting an interactive retail kiosk into a network served by a server computer;
(b) receiving frequent shopper program inputs from a customer at the kiosk;
(c) performing frequent shopper program functions at the server computer in response to customer inputs at the kiosk; and
(d) providing frequent shopper program outputs to the customer at the kiosk.

12. A method as claimed in claim 11, wherein step (c) includes accessing a frequent shopper program database.

13. A method as claimed in claim 12, wherein step (c) includes performing account maintenance functions on the customer's frequent shopper account in the frequent shopper program database.

14. A method as claimed in claim 12, wherein step (c) including delivering frequent shopper program offer information to the customer.

15. A method as claimed in claim 12, wherein step (c) includes redeeming frequent shopper program points contained in a frequent shopper program account in the database.

16. A method as claimed in claim 12, wherein the step of accessing a frequent shopper program database includes accessing normalized data from the database.

17. A method as claimed in claim 16, wherein the step of accessing a frequent shopper program database includes accessing normalized data from an external frequent shopper system.

18. A method as claimed in any of claims 11 to 17, wherein step (d) includes providing web pages as frequent shopper program outputs to the customer at the kiosk.
